# EUROPEAN PATENT APPLICATION

(11) **EP 4 717 721 A1**
(43) Date of publication of application: **01.04.2026**
(21) Application number: 24203227.4
(22) Date of filing: 27.09.2024
(51) Int. Cl.: C08G 59/40

(54) **HEAT-CURING EPOXY RESIN COMPOSITION WITH HIGH CORROSION RESISTANCE**

(71) Applicant: Sika Technology AG, 6340 Baar (CH)
(72) Inventor: BRUSCH, Sabrina, 8048 Zürich (CH); GABERELL, Fabio, 8048 Zürich (CH); HALTINER, Sara, 8048 Zürich (CH); LEMPEREUR, Juliette, 8048 Zürich (CH); XU-RABL, Rui, 8048 Zürich (CH)
(74) Representative: Sika Patent Attorneys

(57) **Abstract**

The present invention relates to thermosetting one-component epoxy resin compositions comprising a liquid epoxy resin **A**, latent curing agent **B**, toughness improver **D** and corrosion inhibiting additives **E**, wherein the corrosion inhibiting additive **E** is either a combination **E1** of at least one phenol carboxylic acid with at least one flavonoid or at least one hydrolysable tannin **E2**.

The compositions feature improved corrosion resistance, good storage stability and good usability as a one-component thermosetting adhesive, especially as a thermosetting one-component bodywork adhesive in motor vehicle construction.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

However, efforts are currently under way in the market to increase the corrosion resistance of said thermosetting epoxy resin compositions. Thus, there is a great need on the market for thermosetting epoxy resin compositions containing impact modifiers that display a sufficient resistance to corrosion. There is therefore a need for toughened thermosetting one-component epoxy resin compositions which improved corrosion resistance.

### Summary of the invention

It is therefore an object of the present invention to provide toughened thermosetting one-component epoxy resin compositions that have improved corrosion resistance.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one epoxy resin **A** having an average of more than one epoxy group per molecule;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) at least one toughness improver **D**, preferably selected from the group consisting of terminally blocked polyurethane polymers **D1** and liquid rubbers **D2**, preferably a terminally blocked polyurethane polymer **D1**; and
d) at least one corrosion inhibiting additive **E**.

The corrosion inhibiting additive **E** is either:
d1) a combination **E1** of at least one phenol carboxylic acid with at least one flavonoid; or
d2) at least one hydrolysable tannin **E2**.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

All industry standards and norms mentioned in the document refer to the versions valid at the date of first filing, unless stated otherwise.

The thermosetting one-component epoxy resin composition comprises a) at least one epoxy resin **A** having an average of more than one epoxy group per molecule.

Preferred epoxy resins **A** have the formula (I)

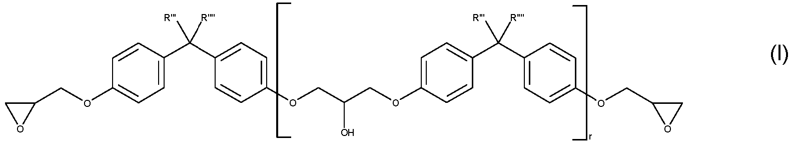

In this formula, the substituents R‴ and Rʺʺ are each independently H or CH₃, preferably H. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof).

Most preferably, the at least one epoxy resins **A** are diglycidyl ethers of bisphenol F. Such liquid resins are available, for example, as Araldite^{®} GY 250, Araldite^{®} PY 304, Araldite^{®} GY 282 (Huntsman), or D.E.R.^{™} 331, or D.E.R.^{™} 330 (Olin), or Epikote 828 (Hexion).

Moreover, so-called novolacs are suitable epoxy resins **A**. These have in particular the following formula: 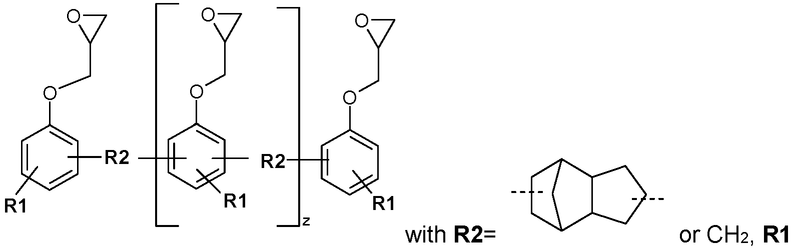 = H or methyl and z = 0 to 7.

In particular, they are phenol or cresol novolacs (**R2** = CH₂).

Such epoxy resins are commercially available under the trade names EPN or ECN as well as Tactix^{®} 556 from Huntsman or under the product line D.E.N.^{™} from Dow Chemical.

Most preferably, the epoxy resin **A** is a liquid epoxy resin of the formula (I), wherein the substituents R‴ and Rʺʺ are each H and the index r has a value of less than 0.2.

Preferably, the proportion of the at least one epoxy resin **A1** is 35 - 65 % by weight, more preferably 40 - 60 % by weight, most preferably 45 - 55 % by weight, based on the total weight of the thermosetting one-component epoxy resin composition.

The composition of the invention also contains b) at least one latent curing agent **B** for epoxy resins. Latent curing agents are substantially inert at room temperature and are activated by elevated temperature, typically at temperatures of 70°C or more, thereby initiating the curing reaction. The customary latent curing agents for epoxy resins can be used. Preference is given to a latent curing agents **B** containing nitrogen.

Preferably, the latent curing agent **B** is selected from dicyandiamide, dihydrazides, guanamines, guanidines, anhydrides of polybasic carboxylic acids and aminoguanidines, more preferably, the latent curing agent **B** is selected from dicyandiamide and dihydrazides.

It can be especially preferred, if the latent curing agent **B** is selected from the group consisting of aromatic dicarboxylic dihydrazide **B1** and aliphatic dicarboxylic dihydrazide **B2**, preferably aliphatic dicarboxylic dihydrazide **B2**. In case of the forgoing selections, it can be especially preferred, if the at least one corrosion inhibiting additive **E** is at least one hydrolysable tannin **E2**, preferably tannic acid. This is advantageous with respect to storage stability and reduction in LSS values after corrosion treatment. This can be seen, for example, in the comparison of E9 with E25.

It can also be especially preferred, if the latent curing agent **B** is dicyandiamide **B3**.

In case the latent curing agent **B** is selected from the group consisting of aromatic dicarboxylic dihydrazide **B1** and aliphatic dicarboxylic dihydrazide **B2**, the amount of the latent curing agent **B** for epoxy resins is preferably 2 to 15 wt%, more preferably 6 to 14 wt%, more particularly 8-12 wt%, based on the total weight of the thermosetting one-component epoxy resin composition.

In case the latent curing agent **B** is dicyandiamide **B3**, the amount of the latent curing agent **B** for epoxy resins is preferably 0.5 to 12 wt%, more preferably 1 to 8 wt%, more particularly 2-6 wt%, based on the total weight of the thermosetting one-component epoxy resin composition.

Preferably, the thermosetting epoxy resin composition additionally contains at least one accelerator **C** for epoxy resins. Preferably, the accelerator **C** for epoxy resins is selected from the list consisting of substituted ureas, imidazoles, imidazolines and blocked amines, preferably substituted ureas, more preferably aliphatic substituted ureas.

This preferably comprises substituted ureas of the formula (III) 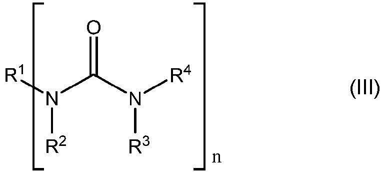 in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (III) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R¹ and R² in formula (III) are both hydrogen atoms and/or in which R³ and R⁴ are both ethyl or methyl groups, preferably methyl groups.

Further preferred urea derivatives of the formula (III) include those in which R¹, R², R³ and R⁴ in formula (III) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

In case the latent curing agent **B** is selected from the group consisting of aromatic dicarboxylic dihydrazide **B1** and aliphatic dicarboxylic dihydrazide **B2**, the fraction of the accelerator **C** for epoxy resins is preferably from 0.005 - 0.5 wt.-%, more preferably 0.01 - 0.2 wt.-%, most preferably 0.02 - 0.1 wt.-%, based on the total weight of the thermosetting epoxy resin composition.

In case the latent curing agent **B** is dicyandiamide **B3**, the fraction of the accelerator **C** for epoxy resins is preferably from 0.05 - 2 wt.-%, more preferably 0.1 - 1.5 wt.-%, most preferably 0.5 - 1.2 wt.-%, based on the total weight of the thermosetting epoxy resin composition.

Preferably, the one-component thermosetting epoxy resin composition comprises at least one toughness improver **D**. The toughness improvers **D** may be solid or liquid, preferably liquid.

The toughness improver **D** is preferably selected from the group consisting of terminally blocked polyurethane polymers **D1**, liquid rubbers **D2** and and core-shell polymers **D3**. Particular preference is given to a terminally blocked polyurethane polymer **D1**.

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, 4-Hydroxyanisole (HQMME), cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**, preferably polymer **Q_{PM}** having terminal amino, thiol or hydroxyl groups.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2**. This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D**, in a third embodiment, may be a core-shell polymer **D3**. Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351 ^{™} from Zeon.

Preferably, the proportion of toughness improver **D**, especially of terminally blocked polyurethane polymer **D1**.

Preferably, the amount of the toughness improver **D** is 5 - 22.5 % by weight, especially 10 - 20 % by weight, preferably 12.5 - 17.5 % by weight, based on the total weight of the thermosetting one-component epoxy resin composition.

The composition of the invention also contains d) at least one corrosion inhibiting additive **E**, wherein the corrosion inhibiting additive **E** is either:
d1) a combination **E1** of at least one phenol carboxylic acid with at least one flavonoid; or
d2) at least one hydrolysable tannin **E2**.

Preferably, the at least one phenol carboxylic acid is selected from the list consisting of chlorogenic acid, neochlorogenic acid, isochlorogenic acid, cryptochlorogenic acid, ferulic acid, p-coumaric acid, caffeic acid, sinapinic acid, cinnamic acid, quinic acid, salicylic acid, 4-hydroxybenzoic acid, gentisic acid, gallic acid, ellagic acid, protocatechuic acid and vanillic acid, more preferably selected from chlorogenic acid and gallic acid. Most preferably, the phenol carboxylic acid is gallic acid.

It can be further preferable if the phenol carboxylic acid is added in the form of avocado seed powder, coffee powder, grape seed powder and green tea powder, preferably in the form of avocado seed powder. Preferably, the beforementioned powder have a mean particle size D (0.5) between 25 - 250 µm, preferably between 50 - 200 µm. The term "mean particle size" here preferably relates to the D (0.5) value of the cumulative volume distribution curve, in which 50% by volume of the particles have a particle size that is smaller than the value. The mean particle size or the D (0.5) value is preferably determined by laser diffractometry.

Preferably, the amount of said powder is 0.5 - 10 wt.-%, preferably 1 - 6 wt.-%, more preferably 1.5 - 4.5 wt.-%, most preferably 2 - 4 wt.-%, based on the total weight of the thermosetting one-component epoxy resin composition. This is advantageous with respect to storage stability and reduction in LSS values after corrosion treatment.

Preferably, the phenol carboxylic acid is present in the thermosetting one-component epoxy resin composition in a concentration of 0.01 - 100 mM, preferably 0.1 - 10 mM, 0.5 - 5 mM, more preferably 1 - 2.5 mM.

Flavonoids have the general structure of a 15-carbon skeleton, which consists of two phenyl rings (A and B) and a heterocyclic ring (C, the ring containing the embedded oxygen).

Flavonoids are divided according to the structure of the skeleton into chalcones, flavan derivatives, aurones and isoflavones. The flavan derivatives are further subdivided according to the degree of oxidation of the central 2-pyran ring (ring C) into: flavanones, flavones, flavonols, leucoanthocyanidins, catechins and anthocyanidins.

Flavonoids can also differ in the number of hydroxy and methoxy substituents. Prenylated flavonoids are usually substituted with a C5 group on the A ring.

Flavonoids can also occur as mono- or oligoglycosides. Flavonoids are also sometimes esterified with aliphatic or aromatic acids, e.g. with malonic acid or caffeic acid.

Preferably, the flavonoid is a flavan derivative, preferably selected from the group consisting of flavanones, flavones, flavonols, leucoanthocyanidins, catechins and anthocyanidins, more preferably flavonols and catechins, most preferably catechins. A preferred flavonol is quercetin.

More preferably, the flavonoid is a catechin, preferably selected from the group consisting of (2*R*,3*S*)-Catechin (+), (2*R*,3*R*)-Epicatechin (-), (2*R*,3*S*)-Gallocatechin (+), (2*R*,3*R*)-Epigallocatechin (-), (2*R*,3*S*)-Afzelechin, (2*S*,3*S*)-Epiafzelechin, (2*R*,3*S*)-Robinetinidol and (2*R*,3*S*)-Fisteinidol, preferably (2*R*,3*S*)-Catechin (+), (2*R*,3*R*)-Epicatechin (-), most preferably (2*R*,3*S*)-Catechin (+).

Preferably, the flavonoid is present in the thermosetting one-component epoxy resin composition in a concentration of 0.01 - 100 mM, preferably 0.1 - 10 mM, 0.25 - 3 mM, more preferably 0.5 - 1.5 mM.

It can be further preferable if the flavonoid is added in the form of avocado seed powder, coffee powder, grape seed powder and green tea powder, preferably in the form of avocado seed powder. Preferably, the beforementioned powder have a mean particle size D (0.5) between 25 - 250 µm, preferably between 50 - 200 µm. The term "mean particle size" here preferably relates to the D (0.5) value of the cumulative volume distribution curve, in which 50% by volume of the particles have a particle size that is smaller than the value. The mean particle size or the D (0.5) value is preferably determined by laser diffractometry.

Preferably, the amount of said powder is 0.5 - 10 wt.-%, preferably 1 - 6 wt.-%, more preferably 1.5 - 4.5 wt.-%, most preferably 2 - 4 wt.-%, based on the total weight of the thermosetting one-component epoxy resin composition. This is advantageous with respect to storage stability and reduction in LSS values after corrosion treatment.

A hydrolysable tannin is a type of tannin that, on heating with hydrochloric or sulfuric acids, yields gallic or ellagic acids. Preferably, the hydrolysable tannin is a hydrolysable tannin as described in the online Römpp Chemie Lexikon (Thöme Verlag), accessed on 18.09.2024, under "tannins" and "tanning agents".

Hydrolysable tannins can be extracted from different vegetable plants, such as chestnut wood, oak wood, tara pods, gallnuts, myrobalan, sumac and Aleppo gallnuts.

The hydrolysable tannin is preferably selected from the group consisting of tannic acid, ellagitannins and gallotannins, preferably tannic acid and ellagitannins.

Preferred ellagitannins are selected from the group of primary ellagitannins, dehydroellagitannins, modified dehydroellagitannins, C-glycosidic ellagitannins and oligomeric ellagitannins, preferably primary ellagitannins, most preferably punicalagin.

Even more preferably, the hydrolysable tannin is selected from the group consisting of tannic acid and ellagitannins, more preferably tannic acid and punicalagin.

Most preferably, the hydrolysable tannin is tannic acid.

Preferably, the hydrolysable tannin is present in the thermosetting one-component epoxy resin composition in a concentration of 0.01 - 100 mM, preferably 0.1 - 10 mM, 0.5 - 5 mM, more preferably 1.5 - 2.5 mM. This is advantageous with respect to storage stability. This can be seen, for example, in the comparison of E9 with E10 and E11 and in the comparison of E25 with E26 and E27. It is further advantageous, especially if an aliphatic dicarboxylic dihydrazide **B2** is used as a curing agent, with respect to reduction in LSS values after corrosion treatment. This can be seen, for example, in the comparison of E9 with E10 and E11.

It can be further preferable if the hydrolysable tannin is added in the form of walnut shell powder. Preferably, the walnut shell powder has a mean particle size D (0.5) between 25 - 250 µm, preferably between 50 - 100 µm. The term "mean particle size" here preferably relates to the D (0.5) value of the cumulative volume distribution curve, in which 50% by volume of the particles have a particle size that is smaller than the value. The mean particle size or the D (0.5) value is preferably determined by laser diffractometry.

Preferably, the amount of walnut shell powder is 0.5 - 10 wt.-%, preferably 1 - 6 wt.-%, more preferably 1.5 - 4.5 wt.-%, most preferably 2 - 4 wt.-%, based on the total weight of the thermosetting one-component epoxy resin composition. This is advantageous with respect to storage stability and reduction in LSS values after corrosion treatment.

In a further preferred if the thermosetting one-component epoxy resin composition additionally comprises at least one filler **F**. Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, wollastonite, titanium oxide, and fumed silicas.

Advantageously, the total proportion of the overall filler **F** is 5 - 35 % by weight preferably 10 - 25 % by weight, more preferably 15 - 20 % by weight, based on the total weight of the thermosetting one-component epoxy resin composition.

In a further preferred embodiment, the composition additionally comprises at least one epoxy-bearing reactive diluent **G**. Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of tri- or more than trifunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;

- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to p-tert-butylphenyl glycidyl ether.

Advantageously, the total proportion of the epoxy-bearing reactive diluent **G** is 0.1-5% by weight, preferably 0.2-3% by weight, especially preferably 0.5 - 2 % by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

It is advantageous when the epoxy resin composition of the invention has a viscosity at 25°C of 750 - 4500 Pa*s, especially 1000 - 3500 Pa*s, preferably 1200 - 3000 Pa*s, more preferably 1500 - 2700 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinccoated steel, and post-phosphated steel, and also aluminum, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 190°C, more preferably between 130 and 180°C.

The substrate **S2** consists here of the same material as or a different material from the substrate **S1**. The substrates **S1** and/or **S2** are in particular the aforementioned metals and plastics.

Preferably, in step iii), the composition is heated to a temperature of 100-220°C, especially of 120-200°C, preferably between 130 and 190°C, more preferably between 130 and 180°C, and the composition is left at the aforementioned temperature for 10 min -6 h, 10 min -2 h, 10 min-60 min, 10 min-30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

More preferably, the compositions of the invention have the following properties:
- LSS1, measured as described in the experimental section, of > 25 MPa, especially ≥ 30 MPa, more preferably ≥ 32 MPa;
- LSS2, measured as described in the experimental section, of > 18 MPa, especially ≥ 20 MPa, more preferably ≥ 22 MPa;
- LSSΔ, measured as described in the experimental section, of < 50%, especially < 45%, more preferably < 40%;
- Visc.Δ, measured as described in the experimental section, of < 150%, especially < 100%, more preferably < 50%.

The invention further encompasses the use of a corrosion inhibiting additive **E**, wherein the corrosion inhibiting additive **E** is either:
a combination **E1** of at least one phenol carboxylic acid with at least one flavonoid; or at least one hydrolysable tannin **E2**, as described above, for increasing the corrosion resistance of a one-component thermosetting epoxy resin composition, especially a thermosetting epoxy adhesive, preferably in motor vehicle construction and sandwich panel construction. Preference is given to a thermosetting epoxy resin composition as described above.

The increase in the corrosion resistance is based on the comparison with one-component thermosetting epoxy resin compositions that do not contain any of the aforementioned corrosion inhibiting additive **E**.

Corrosion resistance is preferably determined by measuring the lap shear strength after oven curing for 40 min at 180°C and followed by 12 cycles VDA 233-102 (DIN EN 1465) of the one-component thermosetting epoxy resin composition, especially on the basis of the determination of the percentage decrease between the value of the lap shear strength after oven curing for 40 min at 180°C and the value of the lap shear strength after oven curing for 40 min at 180°C followed by 12 cycles VDA 233-102. Most preferably, the corrosion resistance is determined as described in the experimental section as show as "LSSΔ" (percentage drop).

Preferably, the type and amount used of the corrosion inhibiting additive **E** correspond to the type and amount described above; more particularly, the types and amounts designated as preferred above are also used with preference.

### Examples

Some examples which further illustrate the invention, but which are not intended to restrict the scope of the invention in any way, are cited below.

Raw materials used for preparing the impact modifier D1 and the reference compositions R1-R13 and the inventive compositions E1-E28 were as follows:

**Table 1**

| **Raw materials used** | **Description** | **Supplier** |
|---|---|---|
| Liquid epoxy resin **A** | DER 331, Bisphenol A-based liquid epoxy resin | Olin |
| Reactive diluent **G** | Heloxy Modifier 65 | Hexion |
| CPP | Corrosion protection particles, (aluminum phosphate) | |
| | Avocado seed powder, median particle size D50 of 200 µm. | NineLife |
| | Phenolic acid: Chlorogenic acid | |
| E1-1 | Flavonoid: Catechin | |
| | Coffee powder, Exquisito Crema, ground coffee beans, median particle size D50 of 200 µm. | Migros Switzerland |
| | Phenolic acid: Chlorogenic acid | |
| E1-2 | Flavonoid: Catechin | |
| | Grape seed powder, median particle size D50 of 75 µm | Bulk Supplements |
| | Phenolic acid: Gallic acid | |
| E1-3 | Flavonoid: Epicatechin, Gallocatechin | |
| | Green tea powder, median particle size D50 of 50 µm | Bulk Supplements |
| | Phenolic acid: Gallic acid | |
| E1-4 | Flavonoid: Catechin | |
| E1-5 | (2*R*,3*S*)-Catechin, Mw: 290.27 g/mol | Carl Roth |
| E1-6 | Gallic acid, Mw: 170.12 g/mol | Carl Roth |
| | Papaya seed powder, median particle size D50 of 75 µm | Bulk Supplements |
| | Phenolic acid: None | |
| RE1-1 | Flavonoid: present | |
| | Guarana extract, median particle size D50 of 50 µm | Bulk Supplements |
| | Phenolic acid: None | |
| RE1-2 | Flavonoid: Catechin, Epicatechin | |
| | Turkey tail mushroom | Bulk |
| | median particle size D50 of 75 µm | Supplements |
| | Phenolic acid: None | |
| RE1-3 | Flavonoid: Quercitin, Baiclein | |
| E2-1 | Walnut shell powder, median particle size D50 of 75 µm Ellagitannin: Pedunculagin | Bulk Supplements |
| E2-2 | Tannic acid, Mw: 1701.19 g/mol | Sigma Aldrich |
| | L-ascorbic acid | Sigma-Aldrich |
| RE2-1 | CAS: 50-81-7, Mw: 176.12 g/mol | |
| | Chlorogenic acid | Sigma-Aldrich |
| RE2-2 | CAS: 327-97-9, Mw: 354.31 g/mol | |
| Hardener **B2** | Adipic dihydrazide (ADH), CAS: 1071-93-8, Technicure ADH-J (median particle size D₅₀ of 2.4 µm), Mw: 174.20 g/mol | Otsuka |
| Hardener **B3** | Dicyandiamide | Siqma-Aldrich |
| Accelerator **C** | N,N-Dimethylurea | Sigma-Aldrich |
| Filler **F1** | Calcium carbonate | Omya |
| Filler **F2** | Pyrogenic silica | Wacker |
| Filler **F3** | Calcium oxide | Nekafin |
| Filler **F4** | Wollastonite | Quarzweke |
| | Poly-THF 2000 (difunctional polybutylene glycol), (OH equivalent weight = about 1000 g/OH equivalent) | BASF |
| | Liquiflex H (hydroxyl-terminated polybutadiene), (OH equivalent weight = about 1230 g/OH equivalent) | Krahn |
| | Isophorone diisocyanate (= "IPDI") | Evonik |
| | Cardolite NC-700 (cardanol, meta-substituted alkenylmonophenol) | Cardolite |

### Preparation of the toughness improver (D1)

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver **D1**.

### Preparation of the base composition 1 (BC-1) with ADH (B2) as curing agent

**Table 2**

| **Raw materials used** | **Wt.-%** |
|---|---|
| Liquid epoxy resin **A** | 45.4 |
| Reactive diluent **G** | 0.5 |
| Hardener **B2** | 10.8 |
| Accelerator **C** | 0.07 |
| Toughness improver **D1** | 22.5 |
| **Additive** (E1-x, E2-x, RE1-x, RE2-x respectively) | * |
| Filler **F1** Calcium carbonate | 6.33 (respectively * removed) |
| Filler **F2** silica | 7.8 |
| Filler **F3** CaO | 4.6 |
| Filler **F4** Wolla | 2 |
| Total | 100 |

The composition as indicated in table 2 was used as base formulation and the amount of **additives** as indicated in table 4 was added. The amount indicated in table 4 is the amount (*) of **additive** in wt.-% in the final compositions E1-E11, respectively R1-7. The same amount of **additive** in wt.-% that was added to a specific composition was removed from the amount of filler F1 shown in table 2 in this composition. For example, in the composition E1, 3.3 wt.-% of additive **E1-1** (avocado seed powder) was added to the base composition 1 whereby the amount of filler F1 was reduced to 3.03 wt.-% to obtain the composition E1.

### Preparation of the base composition 2 (BC-2) with Dicv (B3) as curing agent

**Table 3**

| **Raw materials used** | **Wt.-%** |
|---|---|
| Liquid epoxy resin **A** | 48.3 |
| Reactive diluent **G** | 0.5 |
| Hardener **B3** | 4.2 |
| Accelerator **C** | 1 |
| Toughness improver **D1** | 24 |
| **Additive** (E1-x, E2-x, RE1-x, RE2-x respectively) | * |
| Filler **F1** Calcium carbonate | 7 (respectively * removed) |
| Filler **F2** silica | 8 |
| Filler **F3** CaO | 5 |
| Filler **F4** Wolla | 2 |
| Total | 100 |

The composition as indicated in table 3 was used as base formulation and the amount of **additives** as indicated in table 5 was added. The amount indicated in table 5 is the amount (*) of **additive** in wt.-% in the final compositions E12-28, respectively R8-R13. The same amount of **additive** in wt.-% that was added to a specific composition was removed from the amount of filler F1 shown in table 3 in this composition. For example, in the composition E12, 3.3 wt.-% of additive **E1-1** (avocado seed powder) was added to the base composition 2 whereby the amount of filler F1 was reduced to 3.7 wt.-% to obtain the composition E12.

### Viscosity/storage stability of compositions

Viscosity measurements of the compositions were effected 1 d after production on an Anton Paar MCR 101 rheometer by oscillation using a plate-plate geometry at a temperature of 25°C with the following parameters: 5 Hz, measurement gap 1 mm, plate-plate diameter 25 mm, 1% deformation. The measurement in Pa*s is displayed in table 4 and 5 under "Visc.1".

For assessment of the storage stability of the adhesives, the viscosity measurement was repeated after storage for 1 week at 50°C and the percentage rise in viscosity that results after the storage was ascertained. The measured viscosity in Pa*s measured at a temperature of 25°C after storage for 1 week at 50°C is displayed as "Visc.2". The value of the percentage rise in viscosity is displayed as "Visc.Δ".

### Lap shear strength oven curing for 40 min/180°C ("LSS1") (DIN EN 1465)

Cleaned test specimens of HDG H420 steel (thickness 1.2 mm) that had been reoiled with Anticorit PL 3802-39S were bonded with the adhesive over a bonding area of 25 × 10 mm with glass beads as spacer in a layer thickness of 0.2 mm, and cured at oven temperature 180°C for 40 min.

Lap shear strength in MPa was determined on a tensile tester at a strain rate of 10 mm/min in a triple determination to DIN EN 1465 at a temperature of 23°C ("LSS1").

### Lap shear strength oven curing for 40 min/180°C and 12 cycles VDA 233-102 ("LSS2") (DIN EN 1465)

Cleaned test specimens of HDG H420 steel (thickness 1.2 mm) that had been reoiled with Anticorit PL 3802-39S were bonded with the adhesive over a bonding area of 25 × 10 mm with glass beads as spacer in a layer thickness of 0.2 mm, and cured at oven temperature 180°C for 40 min. Said specimens were then exposed to 12 cycles VDA 233-102 before determining the lap shear strength. A test cycle lasts 1 week which consists of:
**A.** 24h cycle: 3h neutral salt spray atmosphere (35°C/1% NaCl solution/pH 6.5 to 7.2) and 21h humid climate (30-50°C/50-95% relative humidity) **B.** 24h humid climate (25-50°C/70-98% relative humidity) **C.** 24h cycle: 5h freezing phase (-15°C/70% relative humidity) and 19h humid climate (35-50°C/70-95% relative humidity). The test cylcle has the following sequence over the 7 days: BACABBA.

Lap shear strength in MPa was then determined on a tensile tester at a strain rate of 10 mm/min in a triple determination to DIN EN 1465 at a temperature of 23°C ("LSS2").

The reduction from the lap shear strength values of "LSS1" and "LSS2" in percentage is show as "LSSΔ" (percentage drop).

The fracture patterns of the lap shear measurements were assessed by eye in the following order (the earlier mentioned position in the sequence corresponds to better adhesion behavior (best to worst) and indicated in percentage):
Cohesion failure ("CF")
Surface-close cohesion failure ("SCF")
White failure ("WF")
Adhesion failure ("AF")

The visual assessment of the measurements from "LSS1" are shown as "Frac1", the visual assessment of the measurements from "LSS2" are shown as "Frac2" respectively.

In addition, the composition E1 was used in an open circuit potential measurement and compared to the reference composition R1. The Open circuit potential (OCP) is the potential difference between a working electrode (WKG), which is the sample with the adhesive and a reference electrode (REF). These electrodes are immersed in an electrolyte and relate to a voltmeter. Open circuit means that the potential is present when the electrodes are detaches and there is no external potential. The result of the measurement is illustrated in a diagram that shows the OCP vs. the immersion time. A higher value and therefore a higher potential difference indicates that more metal ions were set free from the surface. This means that the system is weaker and the corrosion performance is worse. In the case of the adhesives, a lower and constant OCP indicates that a corrosion inhibiting additive act as a corrosion inhibitor. The reference electrode was an Ag/AgCI electrode with constant potential. Each adhesive sample (working electrode) were immersed together with the reference electrode in an electrolyte for over 100 hours. This electrolyte was a 0.1M sodium chloride solution.

Three independent measurements showed that the first 72 hours of the investigation the behaviour of the reference composition R1 and the sample with the composition E1 was near the same. After this time the OCP of the reference composition R1 increased. This indicates a higher zinc content in the solution and therefore a faster corrosion process. The OCP of the adhesive compositions E1 remained constant after 72 hours. This indicates that the corrosion process was inhibited by the corrosion inhibiting additive.

A contact angle measurement showed no difference between the composition E1 and the reference composition R1 indicating that the corrosion inhibiting additive E1-1 in E1 does not have an influence on the adhesion. The results of the measurements of the adhesive E1 and the reference R1 are near the same.

The free surface energy was determined based on the contact angle measurements with water and diiodomethane. The contact angle is a degree for the wettability. It is the angle at the intersection point of a drop and a solid surface. Free surface energy is defined as the work that needs to be done to increase the surface of a phase (liquid/solid). The unit is J/m². It determines the wettability of a solid phase. A high surface energy of a solid phase leads to a good wettability. The tested substrate was HDG H420 (1.2mm). The samples were cleaned with heptane and oiled with the standard oil Anticorit PL 3802-39S. Five drops of each solution were placed on one sample.

The above-mentioned results of the comparison of E1 with R1 indicate that the corrosion inhibiting additives **E** of the present invention work by inhibition of the corrosion during the 12 cycles VDA 233-102 and not by generally increasing the adhesion to the substrate. This is also consistent with the findings of the fracture patterns.

**Table 4**

| Additive | **R1** | **R2** | **E1** | **E2** | **E3** | **E4** | **E5** | **E6** | **R3** | **R4** | **E7** | **R5** | **E8** | **E9** | **E10** | **E11** | **R6** | **R7** |
|---|---|---|---|---|---|---|---|---|---|---|---|---|---|---|---|---|---|---|
| CPP | | 3.3 | | | | | | | | | | | | | | | | |
| E1-1 | | | 3.3 | 1.7 | 5 | | | | | | | | | | | | | |
| E1-2 | | | | | | 3.3 | 1.7 | 5 | | | | | | | | | | |
| E1-3 | | | | | | | | | | | | | | | | | | |
| E1-4 | | | | | | | | | | | 3.3 | | | | | | | |
| E1-5 | | | | | | | | | | | | | | | | | | |
| E1-6 | | | | | | | | | | | | | | | | | | |
| RE1-1 | | | | | | | | | 3.3 | | | | | | | | | |
| RE1-2 | | | | | | | | | | 3.3 | | | | | | | | |
| RE1-3 | | | | | | | | | | | | 3.3 | | | | | | |
| E2-1 | | | | | | | | | | | | | 3.3 | | | | | |
| E2-2 | | | | | | | | | | | | | | 3.3 | 1.7 | 5 | | |
| RE2-1 | | | | | | | | | | | | | | | | | 0.5 | |
| RE2-2 | | | | | | | | | | | | | | | | | | 0.5 |
| Visc.1 | 1877 | 2315 | 2170 | 2489 | 2298 | 2295 | 2166 | 2581 | 2249 | 1765 | 1971 | 1992 | 2028 | 1966 | 2260 | 2094 | 1728 | 1799 |
| Visc.2 | 3058 | 3853 | 3246 | 3362 | 3715 | 3152 | 3438 | 3061 | 3493 | 3164 | 3030 | 2755 | 2602 | 2762 | 3926 | 4035 | 2342 | 2441 |
| Visc.Δ | 63 | 66 | 50 | 35 | 62 | 37 | 59 | 19 | 55 | 79 | 54 | 38 | 28 | 40 | 74 | 93 | 36 | 36 |
| LSS1 | 34.2 | 34.7 | 32.6 | 34.1 | 32.5 | 32.7 | 34.6 | 32.5 | 32.5 | 33.6 | 32.5 | 35.1 | 34.3 | 27.6 | 30.7 | 26 | 34.9 | 33.3 |
| LSS2 | 17.5 | 18.7 | 19.3 | 16.9 | 17.9 | 18.5 | 18 | 17.9 | 14.7 | 17 | 18.1 | 18.6 | 18.8 | 18.2 | 17.1 | 15.7 | 16.9 | 14.8 |
| LSSΔ | -49 | -46 | -41 | -50 | -45 | -43 | -48 | -45 | -55 | -49 | -44 | -47 | -45 | -34 | -44 | -40 | -52 | -56 |
| Frac1 | 90% SCF, 10% CF | 90% SCF, 10% CF | 95% SCF, 5% CF | | | 85% SCF, 15% CF | | | | | 80% SCF, 20% CF | | 85% SCF, 15% CF | 100% CF | | | | |
| Frac2 | 5% AF, 5% CR, 90% WF | 5% AF, 5% CR, 90% WF | 2% AF, 5% CR, 93% WF | | | 2% AF, 5% CR, 93% WF | | | | | 5% SCF, 5% CR, 90% WF | | 5% CR, 95% WF | 58% SCF, 2% CR, 30% WF, 10% CF | | | | |

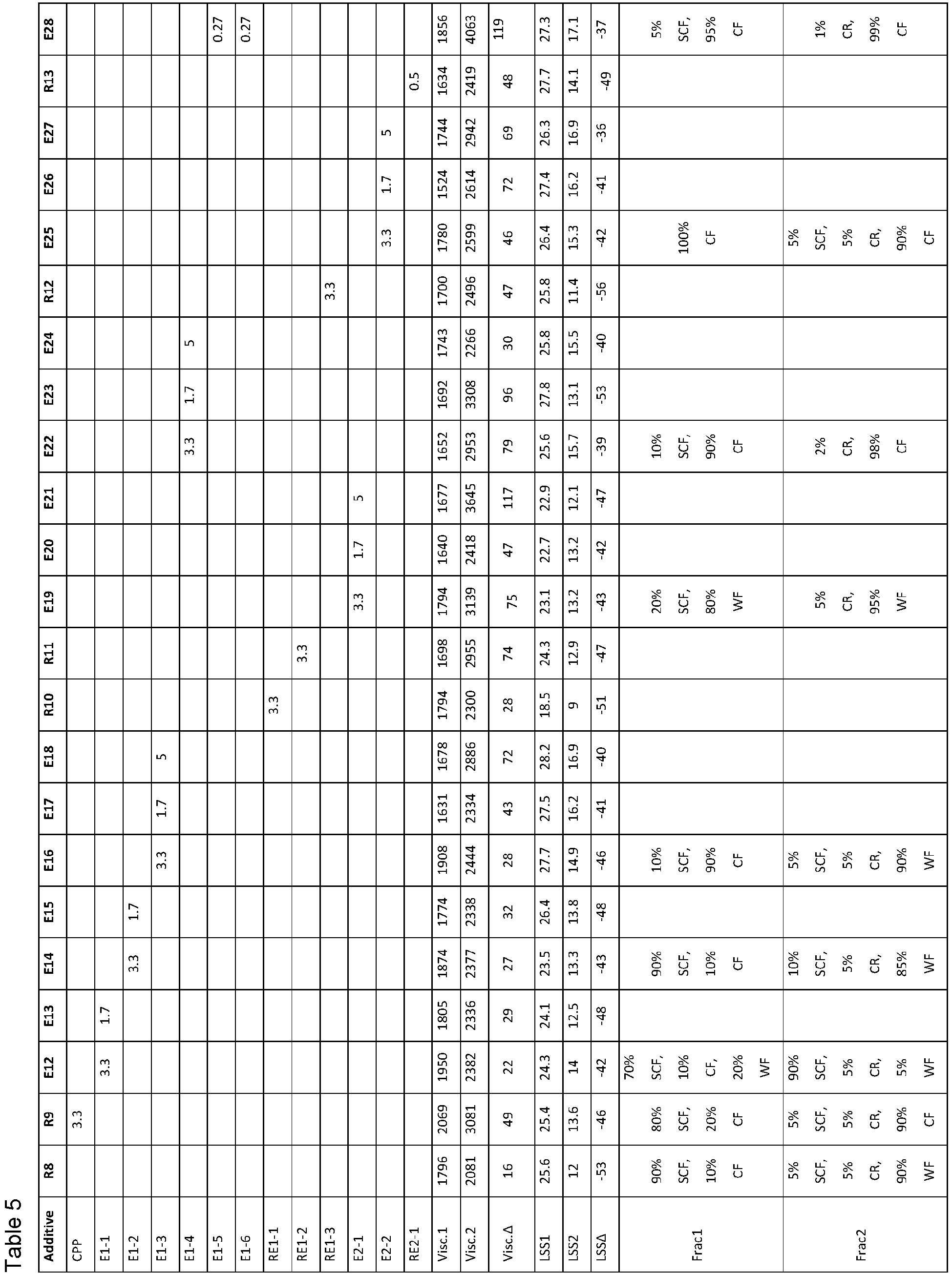

## Claims

1. A thermosetting one-component epoxy resin composition comprising:
a) at least one epoxy resin **A** having an average of more than one epoxy group per molecule;
b) at least one latent curing agent **B** for epoxy resins, preferably the latent curing agent **B** is selected from the group consisting of aromatic dicarboxylic dihydrazide **B1**, aliphatic dicarboxylic dihydrazide **B2** and dicyandiamide **B3**;
c) at least one toughness improver **D**, preferably selected from the group consisting of terminally blocked polyurethane polymers **D1** and liquid rubbers **D2**, preferably a terminally blocked polyurethane polymer **D1**; and
d) at least one corrosion inhibiting additive **E**, wherein the corrosion inhibiting additive **E** is either:
d1) a combination **E1** of at least one phenol carboxylic acid with at least one flavonoid; or
d2) at least one hydrolysable tannin **E2**.

2. The thermosetting one-component epoxy resin composition as claimed in claim 1, **characterized in that** the hydrolysable tannin **E2** is selected from the group consisting of tannic acid, ellagitannins and gallotannins, preferably tannic acid and ellagitannins, more preferably tannic acid.

3. The thermosetting one-component epoxy resin composition as claimed in any of the preceding claims, **characterized in that** phenol carboxylic acid is selected from the list consisting of chlorogenic acid, neochlorogenic acid, isochlorogenic acid, cryptochlorogenic acid, ferulic acid, p-coumaric acid, caffeic acid, sinapinic acid, cinnamic acid, quinic acid, salicylic acid, 4-hydroxybenzoic acid, gentisic acid, gallic acid, ellagic acid, protocatechuic acid and vanillic acid, more preferably selected from chlorogenic acid and gallic acid, most preferably, the phenol carboxylic acid is gallic acid.

4. The thermosetting one-component epoxy resin composition as claimed in any of the preceding claims, **characterized in that** the flavonoid is a flavan derivative, preferably selected from the group consisting of flavanones, flavones, flavonols, leucoanthocyanidins, catechins and anthocyanidins, more preferably catechins, most preferably the flavonoid is a catechin.

5. The thermosetting one-component epoxy resin composition as claimed in any of the preceding claims, **characterized in that** the hydrolysable tannin **E2** is present in the thermosetting one-component epoxy resin composition in a concentration of 0.01 - 100 mM, preferably 0.1 - 10 mM, 0.5 - 5 mM, more preferably 1.5 - 2.5 mM.

6. The thermosetting one-component epoxy resin composition as claimed in any of the preceding claims, **characterized in that** the flavonoid is present in the thermosetting one-component epoxy resin composition in a concentration of 0.01 - 100 mM, preferably 0.1 - 10 mM, 0.25 - 3 mM, more preferably 0.5 - 1.5 mM.

7. The thermosetting one-component epoxy resin composition as claimed in any of the preceding claims, **characterized in that** the phenol carboxylic acid is present in the thermosetting one-component epoxy resin composition in a concentration of 0.01 - 100 mM, preferably 0.1 - 10 mM, 0.5 - 5 mM, more preferably 1 - 2.5 mM.

8. The thermosetting one-component epoxy resin composition as claimed in any of the preceding claims, **characterized in that** the at least one epoxy resin **A** has the formula (I) 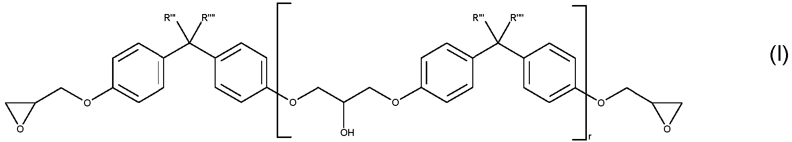 wherein the substituents R‴ and Rʺʺ are each independently H or CH₃, preferably H, the index r has a value of 0 to 1, preferably, r has a value of less than 0.2.

9. The thermosetting one-component epoxy resin composition as claimed in any of the preceding claims, **characterized in that** the latent curing agent **B** is selected from the group consisting of aromatic dicarboxylic dihydrazide **B1** and aliphatic dicarboxylic dihydrazide **B2**, preferably aliphatic dicarboxylic dihydrazide **B2**, and the at least one corrosion inhibiting additive **E** is at least one hydrolysable tannin **E2**, preferably tannic acid.

10. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, preferably imidazoles and substituted ureas, most preferred substituted ureas.

11. The thermosetting one-component epoxy resin composition as claimed in any of the preceding claims, **characterized in that** the thermosetting one-component epoxy resin composition additionally includes at least one filler **F**, preferably selected from the group consisting of calcium carbonate, calcium oxide, wollastonite, titanium oxide, and fumed silicas; preferably the total proportion of the filler **F** is 5 - 35 % by weight preferably 10 - 25 % by weight, more preferably 15 -20 % by weight, based on the total weight of the thermosetting one-component epoxy resin composition.

12. The thermosetting one-component epoxy resin composition as claimed in any of the preceding claims, **characterized in that** the proportion of the epoxy resin A is 35 - 65 % by weight, more preferably 40 - 60 % by weight, most preferably 45 - 55 % by weight, based on the total weight of the one-component epoxy resin composition.

13. The thermosetting one-component epoxy resin composition as claimed in any of the preceding claims, **characterized in that** the one-component epoxy resin composition has a viscosity at 25°C of 750 - 4500 Pa*s, especially 1000 - 3500 Pa*s, preferably 1200 - 3000 Pa*s, more preferably 1500 - 2700 Pa*s.

14. The use of a thermosetting one-component epoxy resin composition as claimed in any of claims 1 to 13 as one-component thermosetting adhesive, especially as thermosetting one-component bodywork adhesive in motor vehicle construction.

15. A process for the adhesive bonding of heat-stable substrates, comprising the stages of:
i) applying a thermosetting one-component epoxy resin composition as claimed in any of claims 1 to 13 to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 190°C, more preferably between 130 and 180°C;
in which the substrate **S2** consists of the same material as or a different material from the substrate **S1**.

16. The use of a corrosion inhibiting additive **E**, wherein the corrosion inhibiting additive **E** is either:
a combination **E1** of at least one phenol carboxylic acid with at least one flavonoid; or
at least one hydrolysable tannin **E2**;
preferably as described as the corrosion inhibiting additive **E** in claims 1 to 13, for increasing the corrosion resistance of a one-component thermosetting epoxy resin composition, especially a thermosetting epoxy adhesive, preferably in motor vehicle construction and sandwich panel construction, more preferably it is a one-component thermosetting epoxy resin composition as claimed in any of claims 1 to 13,
preferably the corrosion resistance is determined as described in the description.
